# EUROPEAN PATENT SPECIFICATION

(11) **EP 1 654 295 B1**
(45) Date of publication and mention of the grant of the patent: **14.01.2009**
(21) Application number: 04779627.1
(22) Date of filing: 30.07.2004
(51) Int. Cl.: C08F 210/10, C08F 216/12, C08F 297/00, C08F 8/12, C08F 216/06

(54) **COPOLYMERS COMPRISING BRANCHED OLEFIN AND VINYL ETHER UNITS**
COPOLYMERE MIT VERZWEIGTEN OLEFINEINHEITEN UND VINYLETHEREINHEITEN
COPOLYMERES COMPORTANT DES UNITES OLEFINE RAMIFIEE ET DES UNITES ETHER VINYLIQUE

(30) Priority: 31.07.2003 US 491460 P; 29.07.2004 US 902280
(43) Date of publication of application: 10.05.2006
(73) Proprietor: Scimed Life Systems, Inc., Maple Grove, Minnesota 55311-1566 (US)
(72) Inventor: FAUST, Rudolf, Lexington, MA 02421 (US); ZHOU, Younghua, Lowell, MA 01854 (US)
(74) Representative: HOFFMANN EITLE
(86) International application number: PCT/US2004/024624
(87) International publication number: WO 2005/012373

(56) References cited:
- RUTH, WILLIAM G. ET AL: "Synthesis of poly(tert-butyldimethylsilyl vinyl ether) block copolymers using silyl aldol polymerization" POLYMER PREPRINTS (AMERICAN CHEMICAL SOCIETY, DIVISION OF POLYMER CHEMISTRY) , 34(2), 584-5 CODEN: ACPPAY; ISSN: 0032-3934, 1993, XP009040674
- ZHOU, YONGHUA; FAUST, RUDOLF: "Synthesis of poly(isobutylene-b-tert.-butyl vinyl ether) and poly(isobutylene-b-tert.-butyldimethylsily l vinyl ether) diblock copolymers" POLYMER PREPRINTS (AMERICAN CHEMICAL SOCIETY, DIVISION OF POLYMER CHEMISTRY) , 44(2), 661-662 CODEN: ACPPAY; ISSN: 0032-3934, 2003, XP009040666
- RUTH; BRITTAINS: "Silicon-mediated synthesis of new amphiphilic oligomers" JOURNAL OF POLYMER SCIENCE, PART A CHEMISTRY, vol. 35, 15 January 1997 (1997-01-15), pages 163-170, XP002308518
- HADJIKYRIACOU S ET AL: "LIVING CATIONIC HOMOPOLYMERIZATION OF ISOBUTYL VINYL ETHER AND SEQUENTIAL BLOCK COPOLYMERIZATION OF ISOBUTYLENE WITH ISOBUTYL VINYL ETHER. SYNTHESIS AND MECHANISTIC STUDIES" MACROMOLECULES, AMERICAN CHEMICAL SOCIETY. EASTON, US, vol. 28, no. 23, 6 November 1995 (1995-11-06), pages 7893-7900, XP000536361 ISSN: 0024-9297

## Description

### BACKGROUND OF THE INVENTION

As is well known, polymers are molecules containing one or more chains, which contain multiple copies of one or more constitutional units. An example of a common polymer is polystyrene 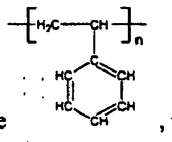 where n is an integer, typically an integer of 10 or more, more typically on the order of 10's, 100's, 1000's or even more, in which the constitutional units in the chain correspond to styrene monomers: 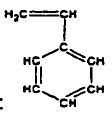 (i.e., they originate from, or have the appearance of originating from, the polymerization of styrene monomers, in this case the addition polymerization of styrene monomers).

Copolymers are polymers that contain at least two dissimilar constitutional units. Copolymers are an important class of polymers and have numerous commercial applications. For instance, their unique properties, whether in pure form, in blends, in melts, in solutions, etc., lead to their use in a wide range of products, for example, as compatiblilizers, adhesives, dispersants and so forth. Because each copolymer has its own unique properties, there is a continuing need for novel copolymers, which can be used in products such as those above.

The "Synthesis of poly(t-butyldimethylsilyl vinyl ether) Block Copolymers using Silyl Aldol Polymerization" is described by Ruth et al. in Polymer Preprints (American Chemical Society, Division of Polymer Chemistry), 34(2), 584-5, 1993. Ruth and Britain furthermore published a paper on "Silicon-Mediated Synthesis of New Amphiphilic Oligomers" in the Journal of Polymer Science, Part A Chemistry 35(1997) 163-170. Hadjikyriacou and Faust described the "Living Cationic Homopolymerization of Isobutyl Vinyl Ether and Sequential Block Copolymerization of Isobutylene with Isobutyl Vinyl Ether. Synthesis and Mechanistic Studies" in Macromolecules, American Chemical Society, 28 (1995) 7893-7900.

### SUMMARY OF THE INVENTION

According to an aspect of the present invention, a copolymer is provided, which comprises:
a plurality of constitutional units that correspond to one or more branched olefin monomer species; a plurality of constitutional units that correspond to one or more vinyl ether monomer species, wherein the vinyl ether monomer species are selected from hydrolysable vinyl ether monomer species and vinyl ether monomer species having a T_{g} greater than about 25°C, and
wherein said copolymer is a block copolymer of the formula X(POL-C-PVE)ₙ, where X corresponds to an initiator species, C corresponds to a capping species which is a residue derived from a diaryl alkene, POL is an olefin block that comprises the plurality of constitutional units corresponding to said one or more branched olefin monomer species, PVE is a vinyl ether block that comprises the plurality of constitutional units corresponding to said one or more vinyl ether monomer species, and n is a positive whole number ranging from 1 to 5.

In certain embodiments, the copolymer is a block copolymer that comprises: (a) one or more olefin blocks that comprise a plurality of constitutional units corresponding to the one or more branched olefin monomer species and (b) one or more vinyl ether blocks that comprise a plurality of constitutional units corresponding to the one or more vinyl ether monomer species.

In embodiments where one or more hydrolysable vinyl ether monomer species are incorporated into the copolymer, at least a portion of the vinyl ether monomer species may be hydrolyzed to form hydroxyl groups.

According to another aspect of the present invention, a copolymer is provided, which comprises:
a plurality of constitutional units that correspond to one or more branched olefin monomer species and a plurality of constitutional units that correspond to vinyl alcohol, wherein said copolymer is a block copolymer of the formula X(POL-C-PVA)n, where X corresponds to an initiator species, C corresponds to a capping species which is a residue derived from a diaryl alkene, POL is an olefin block that comprises a plurality of constitutional units corresponding to said one or more branched olefin monomer species, PVA is a vinyl ether block that comprises a plurality of constitutional units corresponding to vinyl alcohol, and n is a positive whole number ranging from 1 to 5.

In some instances, the copolymer (for instance, the vinyl alcohol block) further comprises a plurality of constitutional units that correspond to one or more non-hydrolysable vinyl ether monomer species.

Other aspects of the present invention are directed to a method of making copolymers. The method comprises:
(a) providing a carbocationically terminated polymer comprising one or more olefin blocks that comprise a plurality of constitutional units corresponding to one or more branched olefin monomer species;
(b) contacting under reaction conditions said carbocationically terminated polymer with a capping species that does not homopolymerize under said reaction conditions, thereby forming an end-capped carbocationically terminated polymer; and
(c) contacting said end-capped carbocationically terminated polymer with one or more vinyl ether monomer species under reaction conditions having lower Lewis acidity than the reaction conditions of step (b),
wherein the vinyl ether monomer species are selected from hydrolysable vinyl ether monomer species and vinyl ether monomer species having a Tg greater than about 25°C.

In embodiments where one or more hydrolysable vinyl ether monomer species are incorporated into the copolymer, at least a portion of the vinyl ether monomer species may be hydrolyzed to form hydroxyl groups.

The carbocationically terminated polymer of step (a) may be formed, for example, from a reaction mixture that comprises: (i) a solvent system, (ii) one or more branched isoolefin monomer species, (iii) an initiator selected form an organic ether, an organic ester, an organic alcohol, and an organic halide, and (iv) a Lewis acid, for example, TiCl₄.[0015] An advantage of the present invention is that novel elastomeric copolymers can be produced, which can be used in a variety of commercial applications.

Another advantage of the present invention is that novel copolymers can be produced, which are capable of being hydrolyzed, thereby forming further novel polymers of increased hydrophilicity.

The above and other embodiments, aspects and examples of the present invention will become readily apparent to those of ordinary skill in the art in view of the disclosure herein.

### DETAILED DESCRIPTION OF THE INVENTION

In some aspects, the copolymers of the present invention comprise (a) a plurality of constitutional units that correspond to one or more branched olefin monomer species and (b) a plurality of constitutional units that correspond to one or more vinyl ether monomer species. The vinyl ether monomer species may be hydrolysable, have elevated T_{g} characteristics, or a combination of both. Such vinyl ether monomer species are frequently hereinafter referred to as "elevated-T_{g}/hydrolysable vinyl ether monomer species". Typically, each of these constitutional units occurs within the copolymer molecule at a frequency of at least 10 times, and more typically at least 50, 100, 500, 1000 or more times.

Examples of branched olefin monomer species for use in connection with the present invention include C4 to C14 branched olefins, for example, C4 to C10 isoolefins such as isobutylene, 3-methyl-1-butene, 4-methyl-1-pentene and beta-pinene.

Examples of vinyl ether monomer species having elevated T_{g} characteristics (referred to herein as "elevated-T_{g} vinyl ether monomer species") include tert-butyl vinyl ether, tert-butyldimethylsilyl vinyl ether, benzyl vinyl ether, cyclohexyl vinyl ether and neopentyl vinyl ether. By "elevated-T_{g} vinyl ether monomer species" is meant that a vinyl ether homopolymer formed from the monomer species displays a glass transition temperature (T_{g}), as measured by any of a number of techniques including differential scanning calorimetry (DSC), dynamic mechanical analysis (DMA), or dielectric analysis (DEA), that is above room temperature (i.e., 25°C).

Examples of vinyl ether monomer species that are hydrolysable (referred to herein as "hydrolysable vinyl ether monomer species") include tert-butyl vinyl ether, benzyl vinyl ether and tert-butyldimethylsilyl vinyl ether. A "hydrolysable vinyl ether monomer species" is a vinyl ether monomer species whose ether groups can be hydrolyzed to alcohol groups under the influence of acids or bases.

In certain embodiments, the copolymers of the present invention further include a plurality of units that correspond to one or more non-hydrolysable vinyl ether monomer species, in addition to units that correspond to one or more hydrolysable vinyl ether monomer species. Examples of such monomer species include cyclohexyl vinyl ether and neopentyl vinyl ether.

The copolymers of the present invention are block copolymers containing (a) one or more olefin blocks, which contain a plurality of units corresponding to one or more branched olefin monomer species and (b) one or more vinyl ether blocks, which contain a plurality of units that correspond to one or more elevated-T_{g}/hydrolysable vinyl ether monomer species. Examples of branched olefin monomer species and elevated-T_{g} /hydrolysable vinyl ether monomer species are discussed above. As above, in some embodiments, the vinyl ether blocks can further contain a plurality of units that correspond to one or more non-hydrolysable vinyl ether monomer species (see above examples of the same), in addition to units that correspond to one or more hydrolysable vinyl ether monomer species.
The number average molecular weight (Mn) of the block copolymers of the present invention typically range, for example, from about 1000 to about 2,000,000, more typically from about 10,000 to about 300,000, even more typically 50,000 to 150,000, with the vinyl ether units typically comprising 5-75 mol%, more typically 10-50 mol%, even more typically 20-30 mol% of the polymer. In some embodiments, polymers have a narrow molecular weight distribution such that the ratio of weight average molecular weight to number average molecular weight (Mw/Mn) (i.e., the polydispersity index) of the polymers ranges from about 1.0 to about 1.5, or even from about 1.0 to about 1.2.

Living polymerization, i.e., a polymerization that proceeds in the practical absence of chain transfer and termination, is a desirable objective in polymer synthesis. Living polymerizations can yield polymers with well-defined structures as well as controlled molecular weight, molecular weight distribution and end functionalities.

Accordingly, copolymers in accordance with the present invention are made in some embodiments by a process that includes: (a) providing a polymer that contains one or more carbocationically terminated olefin blocks, which blocks further contain a plurality of units that correspond to one or more branched olefin monomer species; (b) contacting the carbocationically terminated polymer with a capping species that does not homopolymerize under the reaction conditions employed, thereby forming an end-capped carbocationically terminated polymer; and (c) contacting the end-capped carbocationically terminated polymer with one or more elevated-T_{g} /hydrolysable vinyl ether monomer species under reaction conditions that are of lower Lewis acidity than the reaction conditions of step (b). For example, as discussed further below, Lewis acidity in step (b) can be established by including TiCl₄ as a Lewis acid, and the Lewis acidity in step (c) can be lowered by the addition of a titanium tetraalkoxide.

In many embodiments, the carbocationically terminated polymer is formed at low temperature from a reaction mixture that comprises: (a) a solvent system appropriate for cationic polymerization, (b) one or more branched olefin monomer species, (c) an initiator, and (d) a Lewis acid coinitiator. In addition, a proton-scavenger is also typically provided to ensure the practical absence of protic impurities, such as water, which can lead to polymeric contaminants in the final product.

Polymerization can be conducted, for example, within a temperature range of from about 0°C to about -100°C, more typically from about -50°C to -90°C.
Polymerization times are typically those times that are sufficient to reach 90%, 95%, 99% or even higher conversions of the olefin monomer species to polymer.

Among the solvent systems appropriate for cationic polymerization, many of which are well known in the art, are included: (a) C1 to C4 halogenated hydrocarbons, such as methyl chloride and methylene dichloride, (b) C5 to C8 aliphatic hydrocarbons, such as pentane, hexane, and heptane, (c) C5 to C10 cyclic hydrocarbons, such as cyclohexane and methyl cyclohexane, and (d) mixtures thereof. For example, in some beneficial embodiments, the solvent system contains a mixture of a polar solvent, such as methyl chloride, methylene chloride and the like, and a nonpolar solvent, such as hexane, cyclohexane or methylcyclohexane and the like.

Initiators for living carbocationic polymerization are commonly organic ethers, organic esters, organic alcohols, or organic halides, including tert-ester, tert-ether, tert-hydroxyl and tert-halogen containing compounds. Specific examples include alkyl cumyl ethers, cumyl halides, alkyl cumyl esters, cumyl hydroxyl compounds and hindered versions of the same, for instance, dicumyl chloride and 5-tert-butyl,1,3-dicumyl chloride. Carbocationically terminated star polymers can be formed by selecting initiators having three or more initiation sites, for example, tricumyl chloride (i.e., 1,3,5-tris(1-chloroy-1-methylethyl)benzene), which contains three initiation sites.

Examples of Lewis acid coinitiators include metal halides such as boron trichloride, titanium tetrachloride and alkyl aluminum halides. The Lewis acid coinitiator is typically used in concentrations equal to or greater, e.g., 2 to 50 times greater, than the concentration of the initiator.

Examples of proton-scavengers (also referred to as proton traps) include substituted or unsubstituted 2,6-di-tert-butylpyridines, such as 2,6-di-*tert*-butylpyridine and 4-methyl-2,6-di-tert-butylpyridine, as well as 1,8-bis(dimethylamino)-naphthalene and diisopropylethyl amine. The concentration of the proton trap is preferably only slightly higher than the concentration of protic impurities such as water in the polymerization system.

Regardless of the synthesis technique utilized for forming the carbocationically terminated polymer, once a desired living carbocationically terminated polymer is obtained, a capping species that does not homopolymerize under the reaction conditions employed (e.g., the reaction conditions utilized in forming the carbocationically terminated polymer) is contacted with the carbocationically terminated polymer in some embodiments, thereby forming an end-capped carbocationically terminated polymer. Examples of capping species for this purpose include diaryl alkenes such as substituted or unsubstituted diphenyl ethylenes, for instance, diphenyl ethylene or ditolyl ethylene. It is believed that these compounds do not polymerize due to steric hindrance; however, they do form stable carbocations with the carbocationically terminated polyolefin. In general, the diaryl alkylene species is added to the polymerization media in concentrations equal up to about 10 times the concentration of the living chain ends, preferably about 1 to about 5 times the concentration of the living chain ends, even more preferably about 2 times the concentration of the living chain ends. The diaryl alkylene species is allowed to react with the living polymer for a time sufficient to result in the desired degree of chain capping, typically 90% capping, 95% capping, 99% capping, or even more.

The resulting end-capped carbocationically terminated polymer is then contacted with at least one elevated-T_{g} /hydrolysable vinyl ether monomer species, under conditions of suitable Lewis acidity, to produce block copolymers in accordance with the present invention. In certain embodiments, at least one non-hydrolysable vinyl ether monomer species, for example, cyclohexyl vinyl ether and/or neopentyl vinyl ether, is employed in addition to the hydrolysable vinyl ether monomer species, for example, by adding this monomer species either concurrently with the hydrolysable monomer species, or adding these monomer species sequentially. Polymerization times are those sufficient to reach the desired conversion of the vinyl ether monomer species to polymer, which is typically 80%, 90%, 95%, 99% or more.

As indicated above, when working with vinyl ether monomer species, the Lewis acidity is typically reduced relative to the reaction conditions that existed earlier (e.g., the conditions associated with end-capping). By decreasing the Lewis acidity, side reactions are minimized, and polymerization is better controlled, leading to high blocking efficiency. One suitable method for reducing Lewis acidity is to add a metal alkoxide species, for example, a titanium alkoxide species such as Ti[OCH(CH₃)₂]₄, Ti[O(CH₂)₃CH₃]₄, or similar organotitanium species. The amount added generally depends on the reactivity of the vinyl ether monomer species. Another suitable technique for reducing Lewis acidity is to replace the existing Lewis acid with a weaker Lewis acid as is known in the art. For example, TiCl₄ can be replaced with a weaker Lewis acid such as SnCl₄.

Further information regarding the preparation of block copolymers from monomer species that have significantly different reactivities, can be found, for example, in U.S. Patent No. 5,428,111, U.S. Patent No. 5,637,647, and U.S. Patent No. 5,677,386.

A variety of block copolymers can be formed using the above techniques. For example, block copolymers of the formula X(POL-C-PVE)ₙ are formed in various embodiments, where X corresponds to the initiator species, C corresponds to the capping species, POL is an olefin block, PVE is a vinyl ether block, and n is a positive whole number. Linear block copolymers are formed where n=1 or n=2. Where n=2, the copolymers are sometimes referred to as triblock copolymers. This terminology disregards the presence of the initiator, for example, treating POL-X-POL as a single olefin block, with the triblock therefore denoted as PVE-POL-PVE. Star shaped copolymers are formed where n=3 or more. The value of n is typically dictated by the functionality of the initiator molecule, with monofunctional initiators corresponding to n=1, difunctional initiators corresponding to n=2, and so forth. As noted above, the olefin block(s) will contain a plurality of constitutional units that correspond to one or more branched olefin species, while the vinyl ether block(s) will contain a plurality of constitutional units that correspond to one or more vinyl ether monomer species that are hydrolysable, have elevated T_{g} characteristics, or a combination of both characteristics.

In another aspect, at least a portion of the pendant hydrolysable ether units within the copolymers of the present invention are hydrolyzed to form pendant alcohol groups. Hydrolysis of the pendant ether groups is beneficially carried out, for example, by bubbling dry HBr gas through the polymer solution in methylene chloride or toluene (see Ohgi, H.; Sato, T. Macromolecules 1999, 32, 2403). Hydrolysis conditions and reaction times are typically sufficient to achieve 90%, 95%, 99% or even higher conversions of the pendant hydrolysable ether groups to alcohol groups.

As a specific example, using the above technique, a block copolymer containing poly(branched olefin monomer) blocks and poly(hydrolysable vinyl ether monomer) blocks can be converted into a copolymer containing poly(branched olefin monomer) blocks and poly(vinyl alcohol) blocks.

The invention is further described with reference to the following non-limiting Examples.

### EXAMPLES

In the examples that follow, molecular weight is measured by GPC (Gel Permeation Chromatography). Blocking efficiency was calculated based on chain end analysis by ¹H NMR spectroscopy. The proton trap was 2,6-di-tert-butyl-pyridine (DTBP).

The strategy employed in these examples for the synthesis block copolymers is to cap the carbocationic polyisobutylene (PIB) chain end with 4,4'-dimethyl-1,1-diphenylethylene (also known as ditolyl ethylene or DTE): 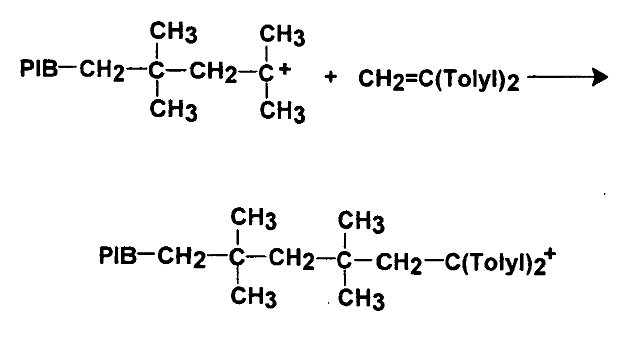 and subsequently initiate vinyl ether polymerization from the generated stable diphenyl alkyl cation. Since the diphenyl alkyl cation is stable and fully ionized, the Lewis acidity can be decreased to a desired level to control the rate of homopolymerization of t-butyl vinyl ether (tBVE) or tert-butyldimethylsilyl vinyl ether (SiVE), leading to near 100% crossover efficiency and a narrow molecular weight distribution. Crossover is initiation of polymerization from the living PIB chain end, literally crossing over from polyisobutylene to poly(vinyl ether), hence the term "crossover".

In the examples below, novel isobutylene-based block-copolymer thermoplastic elastomers are produced. Prior to the present work, all isobutylene-based block-copolymer thermoplastic elastomers known to the present inventors were based on styrene or styrene derivatives. Furthermore, all isobutylene-based block-copolymer thermoplastic elastomers known to the present inventors contained hydrophobic end-blocks, while in the examples below, the present inventors have demonstrated the formation of hydrophilic end-blocks via hydrolysis. The examples below also demonstrate that it is possible to carry out efficient living polymerization of tert-butyl vinyl ether. In this regard, living polymerization of tert.-butyl vinyl ether has been previously reported with ethyl aluminum sesquichloride, but the polymerization was impractically slow, with up to 60 hours being required.

### Reference Example 1

Low molecular weight (Mn=3,600) PIB was prepared using 2,4,4-trimethylpentyl chloride (TMPCI) as initiator, and when the isobutylene conversion reached 100%, 4,4'-dimethyl-1,1-diphenylethylene (DTE) was added. The reaction conditions were as follows: temperature=-80°C, [TMPCI]=0.002M, isobutylene [IB]=0.1286M, [DTBP]=0.004M, [TiCl₄]=0.036M, solvent: methylene chloride/hexane (CH₂Cl₂/Hex) 40/60 v/v mixture. The IB polymerization time was 1 hr. DTE, predissolved in the CH₂Cl₂/Hex 40/60 mixture, was added in 100% excess to the living end at -80 °C. The time for capping reaction was 1hr. According to ¹H NMR, capping was complete (100%).

### Example 2

In these experiments different amounts of Ti[OCH(CH₃)₂]₄, also referred to herein as Ti(OIp)₄, were added before the addition of tert-butyl vinyl ether, but after the DTE capping reaction. The polymerization time for tBVE was 1 hour. The reaction conditions were the following: temperature=-80°C, [TMPCl]=0.004M, [IB]=0.17M, [tBVE]=0.229M, [DTBP]=0.006M, [TiCl₄]=0.064M, solvent: methylene chloride/hexane (CH₂Cl₂/Hex) 60/40 v/v mixture. In these experiments, the crossover efficiency increased with the ratio of [Ti(OIp)₄]/[TiCl₄], reaching 100% at [Ti(OIp)₄]/[TiCl₄]≥1.2; meanwhile, the conversion decreased at higher [Ti(OIp)₄]/[TiCl₄] ratios, indicating decreased polymerization rate for tBVE.

**TABLE 1**

| [Ti(OIp)₄]/[TiCl₄] | Conversion of tBVE (%) | Crossover efficiency (%) |
|---|---|---|
| 0.7 | 84 | 27 |
| 0.8 | 83 | 33 |
| 0.9 | 86 | 47 |
| 1.0 | 85 | 88 |
| 1.2 | 95 | 100 |
| 1.4 | 84 | 100 |
| 1.5 | 86 | 100 |
| 1.6 | 92 | 100 |
| 1.7 | 82 | 100 |
| 1.8 | 80 | 100 |
| 1.9 | 88 | 100 |
| 2.0 | 80 | 100 |
| 2.1 | 68 | 100 |
| 2.2 | 44 | 100 |
| 2.3 | 25 | 100 |
| 2.4 | 15 | 100 |
| 2.6 | 3 | 100 |

### Example 3

In these experiments, after the DTE reaction, different amounts of Ti(OIp)₄ were added before the addition of tert-butyldimethylsilyl vinyl ether (SiVE). The polymerization time for SiVE was I hour. The reaction conditions were the following: temperature=-80 °C, [TMPCl]=0.004M, [IB]=0.17M, [SiVE]=0.145M, [DTBP]=0.006M, [TiCl₄]=0.064M, solvent: methylene chloride/hexane (CH₂Cl₂/Hex) 60/40 v/v mixture. In these experiments, the crossover efficiency increased with the ratio of [Ti(OIp)₄]/[TiCl₄], reaching 100% at [Ti(OIp)₄]/[TiCl₄]≥1.05; meanwhile, the conversion was very low at higher [Ti(OIp)₄]/[TiCl₄] ratios, indicating the very low polymerization rate of SiVE.

**TABLE 2**

| [Ti(OIp)₄]/[TiCl₄] | Conversion of SiVE (%) | Crossover efficiency (%) |
|---|---|---|
| 0.7 | 80 | 16 |
| 0.8 | 82 | 33 |
| 0.9 | 82 | 43 |
| 1.0 | 85 | 75 |
| 1.05 | 16 | 100 |
| 1.1 | 8 | 100 |
| 1.2 | 6 | 100 |

### Example 4

In these experiments, lower initiator concentration was used. The reaction conditions were the following: temperature=-80°C, [TMPCl]=0.002M, [IB]=0.129M, [tBVE]=0.153M, [DTBP]=0.004M, [TiCl₄]=0.036M, solvent: methylene chloride/hexane (CH2Cl₂/Hex) 40/60 v/v mixture. Different amounts of Ti(OIp)₄ were added before the addition of tBVE, but after the DTE reaction. The polymerization time for tBVE was 2 hours. In these experiments, the crossover efficiency reached 100% for all [Ti(OIp)₄]/[TiCl₄] ratios; meanwhile, the conversion was very low at higher [Ti(OIp)₄]/[TiCl₄] ratios, indicating that the polymerization rate of tBVE was slow. However, at low [Ti(OIp)₄]/[TiCl₄] ratios, the molecular weight distributions were broad, showing higher rate of propagation over that of crossover.

**TABLE 3**

| [Ti(OIp)₄]/[TiCl₄] | Conversion of tBVE (%) | Crossover efficiency (%) |
|---|---|---|
| 1.5 | 87 | 100 |
| 1.7 | 89 | 100 |
| 1.8 | 83 | 100 |
| 1.9 | 91 | 100 |
| 2.0 | 65 | 100 |
| 2.1 | 62 | 100 |
| 2.2 | 45 | 100 |
| 2.4 | 26 | 100 |

### Example 5

In these experiments, lower initiator concentration was used. The reaction conditions were the following: temperature=-80°C, [TMPCI]=0.002M, [IB]=0.129M, [SiVE]=0.097M, [DTBP]=0.004M, [TiCl₄]=0.036M, solvent: methylene chloride/hexane (CH₂Cl₂/Hex) 40/60 v/v mixture. Different amounts of Ti(OIp)₄ were added before the addition of tert-butyldimethylsilyl vinyl ether (SiVE), but after the DPE reaction. The polymerization time for SiVE was 2 hours. In these experiments, the crossover efficiency increased with the ratio of [Ti(OIp)₄]/[TiCl₄], reaching 100% at [Ti(OIp)₄]/[TiCl₄]≥1.0; meanwhile, the conversion was very low at higher [Ti(OIp)₄]/[TiCl₄] ratios, indicating that the polymerization of SiVE was very slow.

**TABLE4**

| [Ti(OIp)₄]/[TiCl₄] | Conversion of SiVE (%) | Crossover efficiency (%) |
|---|---|---|
| 0.6 | 90 | 51 |
| 0.7 | 94 | 58 |
| 0.8 | 86 | 72 |
| 0.9 | 95 | 86 |
| 1.0 | 11 | 100 |
| 1.1 | 11 | 100 |

### Reference Example 6

In these experiments, homopolymerization of tBVE was carried out under similar conditions as in Example 4: temperature=-80°C, [TMPCl]=0.002M, [tBVE]=0.765M, [DTBP]=0.004M, [TiCl₄]=0.036M, solvent: methylene chloride/hexane (CH₂Cl₂/Hex) 40/60 v/v mixture. As no IB was added, the obtained polymer was poly(t-butyl vinyl ether) (PtBVE). The [Ti(OIp)₄]/[TiCl₄] was 2.0. 100% conversion was obtained after 4 hours. As indicated by the polydispersity index (PDI) values, homopolymers had narrow molecular weight distribution.

**TABLE 5**

| Time (hour) | Conversion (%) | PDI |
|---|---|---|
| 1/4 | 22 | 1.13 |
| 1/2 | 34 | 1.13 |
| 1 | 61 | 1.10 |
| 2 | 83 | 1.20 |
| 4 | 100 | 1.19 |
| 6 | 100 | 1.16 |
| 8 | 100 | 1.19 |

### Example 7

In these experiments, methyl chloride was used instead of methylene chloride. The reaction conditions were the following: temperature=-80 °C, [TMPCl]=0.002M, [IB]=0.129M, [tBVE]=0.381M, [DTHP]=0.004M, [TiCl₄]=0.036M, solvent: methyl chloride/hexane (CH₃Cl/Hex) 40/60 v/v mixture. Different amounts of Ti(OIp)₄ were added before the addition of tBVE, but after the DTE reaction. The polymerization time for tBVE was 2 hours. In these experiments, the crossover efficiency reached 100% for all [Ti(OIp)₄]/[TiCl₄] ratios studied; meanwhile, the conversion was very low at higher [Ti(OIp)₄]/[TiCl₄] ratios, indicating the polymerization rate of tBVE was slowed down. Different from Example 4, where methylene chloride/hexane mixtures were used, the molecular weight distribution of thus obtained diblock copolymer were narrow even at a low [Ti(OIp)₄]/[TiCl₄] ratio of 1.4.

**TABLE 6**

| [Ti(OIp)₄]/[TiCl₄] | Conversion of tBVE (%) | MWD |
|---|---|---|
| 1.4 | 89 | 1.06 |
| 1.6 | 90 | 1.07 |
| 1.7 | 86 | 1.04 |
| 1.8 | 77 | 1.03 |
| 1.9 | 62 | 1.04 |
| 2.0 | 33 | 1.10 |
| 2.2 | 11 | 1.09 |

### Example 8

In this example the preparation of PtBVE-PIB-PtBVE triblock copolymers is described by using tert-butyl-dicumylchloride (t-BudiCUCl) as initiator. The reaction conditions were the following: temperature=-80 °C, [t-BudiCUCl]=0.001 M, [IB]=1.25 M, [DTBP]=0.004 M, [TiCl₄]=0.036 M, solvent: methylene chloride/hexane (CH₂Cl₂/Hex) 40/60 v/v mixture.

At the end of the IB polymerization (generally 100% conversion), DTE was added at a concentration of 0.004 M and allowed to react for 1 hour. It was followed by the introduction of Ti(OIp)₄ to reach a [Ti(OIp)₄]/[TiCl₄] ratio of 2.0. The tBVE was added and polymerized for 6 hours to ensure 100% conversion. By varying the monomer species concentration, triblock copolymers were prepared with different lengths of center block and end blocks.

The triblock molecular weights and MWDs were obtained using a Gel Permeation Chromotography on line Multiangle LASER Light Scattering Detector. The molecular weights and MWDs are in Table 7. The triblock compositions, also reported in Table 9, were calculated from the conversion and from proton NMR measurements. The triblock copolymers exhibited characteristic properties of thermoplastic elastomers, as shown in Table 8.

**TABLE 7**

| Sample | Designed MW | | Triblock (GPC) | | PTBVE content (NMR) | | PTBVE content (calc) | |
|---|---|---|---|---|---|---|---|---|
| | PIB/1000 | PTBVE/1000 | Mn/1000 | Mw/Mn | mol % | Wt. % | mol % | Wt. % |
| A | 70 | 2 × 9 | 86.8 | 1.38 | 13 | 22 | 13 | 21 |
| B | 70 | 2 × 20 | 104.9 | 1.34 | 27 | 39 | 25 | 38 |
| C | 70 | 2 × 15 | 96.2 | 1.43 | 23 | 34 | 20 | 31 |

**TABLE 8**

| Sample | 100% modulus (psi) | 200% modulus (psi) | 300% modulus (psi) | 400% modulus (psi) | 500% modulus (psi) | Tensile strength (psi) | Elongation at break (%) |
|---|---|---|---|---|---|---|---|
| A | 60 | 72 | 81 | 93 | 120 | 619 | 1464 |
| B | 410 | 612 | 825 | 1070 | 1250 | 1947 | 900 |
| C | 208 | 250 | 310 | 390 | 490 | 1695 | 1226 |

### Example 9

In this example the preparation of PtBVE-PIB-PtBVE triblock copolymers is described by using tert-butyl-dicumylchloride (t-BudiCUCl) as initiator. This example is similar to Example 8 but methylene chloride was replaced by methyl chloride. The reaction conditions were the following: temperature=-80 °C, [t-BudiCUCl]=0.001 M, [IB]=1.25 M, [DTBP]=0.004 M, [TiCl₄]=0.036 M, solvent: methyl chloride/hexane (CH₃Cl/Hex) 40/60 v/v mixture.

At the end of the IB polymerization, DTE was added at a concentration of 0.004 M and allowed to react for 1 hour. It was followed by the introduction of Ti(OIp)₄ to reach a [Ti(OIp)₄]/[TiCl₄] ratio of 1.6. tBVE was added and polymerized for 3 hours to ensure 100% conversion. By varying the monomer species concentration, triblock copolymers were prepared with different lengths of center block and end blocks.

Following the addition of Ti(OIp)₄, 1.0 or 2.0 ml samples were taken from the reaction flask to estimate the conversion of IB to PIB and to measure the molecular weight of the PIB middle segment. The conversion of IB was generally 100%. The PIB molecular weights and molecular weight distributions (MWDs) were calculated using PIB calibration. The triblock molecular weights and MWDs were obtained using a Gel Permeation Chromotography on line Multiangle LASER Light Scattering Detector. The molecular weights and MWDs are presented in Table 9. The compositions of the triblocks, also reported in Table 9, were calculated from the conversion and from ¹H NMR measurements. The triblock copolymers exhibited characteristic properties of thermoplastic elastomers, as shown in Table 10.

**TABLE 9**

| Sample | PIB | | Triblock | | Size of PTBVE segments | PTBVE content (NMR) | | PTBVE content (calc) | |
|---|---|---|---|---|---|---|---|---|---|
| | Mn/1000 | Mw/Mn | Mn/1000 | Mw/Mn | | mol % | Wt. % | mol % | Wt. % |
| X | 69.4 | 1.08 | 110.5 | 1.08 | 2 × 20,6000 | 27 | 39 | 25 | 38 |
| Y | 66.6 | 1.07 | 96.4 | 1.07 | 2 × 14,900 | 21 | 33 | 20 | 31 |
| Z | 67.3 | 1.06 | 85.9 | 1.08 | 2 × 9,300 | 15 | 23 | 13 | 21 |

**TABLE 10**

| Sample | 100% modulus (psi) | 200% modulus (psi) | 300% modulus (psi) | 400% modulus (psi) | 500% modulus (psi) | Tensile strength (psi) | Elongation at break (%) |
|---|---|---|---|---|---|---|---|
| X | 340 | 425 | 625 | 820 | 1050 | 1816 | 760 |
| Y | 230 | 285 | 425 | 625 | 880 | 2185 | 800 |
| Z | 130 | 170 | 200 | 250 | 280 | 1325 | 1300 |

### Example 10

### The preparation of PSiVE-PIB-PSiVE triblock copolymers.

Tert-butyl-dicumylchloride (t-BudiCUCl) was used as initiators. The reaction conditions were the following: temperature=-80°C, [t-BudiCUCl]=0.001M, [IB]=1.286M, [DTBP]=0.004M, [TiCl₄]=0.036M, solvent: methylene chloride/hexane (CH₂Cl₂/Hex) 40/60 v/v mixture.

At the end of the IB polymerization, DTE was added and reacted for an hour. It was followed by the introduction of Ti(OIp)₄ to reach a [Ti(OIp)₄]/[TiCl₄] ratio of 0.9. The SiVE was added and polymerized for 2 hours. The obtained triblock copolymer was elastomeric.

### Example 11

In these experiments, block copolymerization of IB with cyclohexyl vinyl ether (herein referred as CHVE), was conducted. The reaction conditions were as follows: temperature=-80 °C, [TMPCl]=0.002M, [IB]=0.1M, [CHVE]=0.212M, [DTBP]=0.004M, [TiCl₄]=0.036M, [DTE]=0.004M, solvent: methyl chloride/hexane (CH₃Cl/Hex) 40/60 v/v mixture. Different amounts of Ti(OIp)₄ were added before the addition of CHVE, but after the DTE reaction. The polymerization time for CHVE was 2 hours. In these experiments, the crossover efficiency reached 100% for all studied [Ti(OIp)₄]/[TiCl₄] ratios; with the increase of [Ti(Olp)₄]/[TiCl₄] ratio, the PDI of the obtained polymer decreased, indicating better control over block copolymerization.

**TABLE 11**

| [Ti(OIp)₄]/[TiCl₄] | Conversion of CHBVE (%) | Crossover efficiency (%) | PDI |
|---|---|---|---|
| 1.2 | 99 | 100 | 1.54 |
| 1.4 | 100 | 100 | 1.15 |
| 1.6 | 99 | 100 | 1.08 |
| 1.8 | 94 | 100 | 1.06 |
| 2.0 | 62 | 100 | 1.07 |

### Reference Example 12

In these experiments, homopolymerization ofCHVE was carried out under similar conditions as in Example 11: temperature=-80 °C, [TMPCl]=0.002M [CHVE]=0.53M, [DTBP]=0.004M, [TiCl₄]=0.036M, [DTE]=0.004M, solvent: methyl chloride/hexane (CH₃Cl/Hex) 40/60 v/v mixture. As no IB was added, the obtained polymer was poly(CHVE). The [Ti(OIp)₄]/[TiCl₄] was 1.6. 100% conversion was obtained after 32 min. The PDI of the samples decreased with conversion.

**TABLE 12**

| Time (min) | Conversion (%) | PDI |
|---|---|---|
| 1.5 | 14.0 | 1.69 |
| 3.6 | 30.7 | 1.26 |
| 5.9 | 46.5 | 1.17 |
| 9.3 | 65.2 | 1.15 |
| 15.3 | 78.7 | 1.09 |
| 31.9 | 100 | 1.11 |
| 64 | 100 | 1.08 |

### Reference Example 13

In these experiments, copolymerization of CHVE with tBVE was carried out under similar conditions as in Example 11: temperature=-80 °C, [TMPCl]=0.002M, [CHVE]=0.05M, [tBVE]=0.15M, [DTBP]=0.004M, [TiCl₄]=0.036M, [DTE]=0.004M, solvent: methyl chloride/hexane (CH₃Cl/Hex) 40/60 v/v mixture. As no IB was added, the obtained polymer was poly(CHVE-co-tBVE). The [Ti(OIp)₄]/[TiCl₄] ratio was 1.6. 100% conversion was obtained after 1.5 h. The PDI of the samples was <1.1.

**TABLE 13**

| Time (h) | Conversion (%) | PDI |
|---|---|---|
| 0.5 | 92 | 1.07 |
| 1.5 | 100 | - |
| 3 | 100 | - |
| 5 | 100 | 1.06 |

### Example 14

In this example the preparation of poly(CHVE-co-tBVE)-PIB-poly(CHVE-co-tBVE) triblock copolymers is described by using tert-butyl-dicumylchloride (t-BudiCUCl) as initiator. The reaction conditions were the following: temperature=-80 °C, [t-BudiCUCl]=0.001 M, [IB]=1.25 M, [DTBP]=0.004 M, [TiCl₄]=0.036 M, solvent: methyl chloride/hexane (CH₃Cl/Hex) 40/60 v/v mixture.

At the end of the IB polymerization (generally 100% conversion), DTE was added at a concentration of 0.004 M and allowed to react for 1 hour. It was followed by the introduction of Ti(OIp)₄ to reach a [Ti(OIp)₄]/[TiCl₄] ratio of 1.6. The monomer mixture of CHVE and tBVE (CHVE]=0.05M; [tBVE]=0.15M) was added and polymerized for 2 hours to ensure 100% conversion. Thus the end blocks consisted of 75% of tBVE and 25% of CHVE. The center PIB block had a Mₙ of 67.4 kg/mol (PDI=1.09). The triblock copolymer had narrow molecular weight distribution (pDI=1.11) and exhibited good characteristics of a thermoplastic elastomer. By varying the monomer species concentration, triblock copolymers can be prepared with different lengths and compositions of end blocks.

## Claims

1. A copolymer comprising a plurality of constitutional units that correspond to one or more branched olefin monomer species; a plurality of constitutional units that correspond to one or more vinyl ether monomer species, wherein the vinyl ether monomer species are selected from hydrolysable vinyl ether monomer species and vinyl ether monomer species having a T_{g} greater than about 25°C, and wherein said copolymer is a block copolymer of the formula X(POL-C-PVE)ₙ, where X corresponds to an initiator species, C corresponds to a capping species which is a residue derived from a diaryl alkene, POL is an olefin block that comprises the plurality of constitutional units corresponding to said one or more branched olefin monomer species, PVE is a vinyl ether block that comprises the plurality of constitutional units corresponding to said one or more vinyl ether monomer species, and n is a positive whole number ranging from 1 to 5.

2. The copolymer of claim 1, wherein said copolymer is a block copolymer comprising:
one or more olefin blocks that comprise a plurality of constitutional units corresponding to said one or more branched olefin monomer species and one or more vinyl ether blocks that comprise a plurality of constitutional units corresponding to said one or more vinyl ether monomer species.

3. The copolymer of any of claims 1-2, wherein said one or more vinyl ether monomer species comprise a hydrolysable vinyl ether monomer species.

4. The copolymer of claim 3, wherein said one or more vinyl ether monomer species further comprise a non-hydrolysable vinyl ether monomer species.

5. The copolymer of any of claims 1-2, wherein said one or more vinyl ether monomer species comprise: a hydrolysable vinyl ether monomer species selected from tert-butyl vinyl ether, benzyl vinyl ether and tert-butyldimethylsilyl vinyl ether, and a non-hydrolysable vinyl ether monomer species selected from cyclohexyl vinyl ether and neopentyl vinyl ether.

6. The copolymer of any of claims 1-2, wherein said one or more vinyl ether monomer species comprise at least one member selected from the group consisting of an vinyl ether monomer species having a T_{g} greater than about 25°C, tert-butyl vinyl ether, benzyl vinyl ether and tert-butyldimethylsilyl vinyl ether.

7. The copolymer of any of claims 1-2, wherein said one or more branched olefin monomer species comprise isobutylene, and wherein said one or more vinyl ether monomer species comprise a vinyl ether monomer selected from tert-butyl vinyl ether, benzyl vinyl ether and tert-butyldimethylsilyl vinyl ether.

8. The copolymer of claim 1, wherein n=1, 2 or 3.

9. The copolymer of claim 1, wherein said initiator species is selected from an organic ether, an organic ester, an organic alcohol, an organic halide, 2,4,4-trimethylpentyl chloride and tert-butyl-dicumylchloride.

10. The copolymer of claim 1, wherein said capping species is a substituted or unsubstituted diphenyl ethylene species.

11. A method of making a block copolymer comprising:
(a) providing a carbocationically terminated polymer comprising one or more olefin blocks that comprise a plurality of constitutional units corresponding to one or more branched olefin monomer species;
(b) contacting under reaction conditions said carbocationically terminated polymer with a capping species that does not homopolymerize under said reaction conditions, thereby forming an end-capped carbocationically terminated polymer; and
(c) contacting said end-capped carbocationically terminated polymer with one or more vinyl ether monomer species under reaction conditions having lower Lewis acidity than the reaction conditions of step (b),
wherein the vinyl ether monomer species are selected from hydrolysable vinyl ether monomer species and vinyl ether monomer species having a T_{g} greater than about 25°C.

12. The method of claim 11, wherein the Lewis acidity in step (b) is provided by the presence of TiCl₄, and wherein the Lewis acidity in step (c) is lowered by the addition of a titanium tetraalkoxide species.

13. The method of claim 11, wherein said reaction conditions comprise a temperature between -50°C and -90°C.

14. The method of claim 11, wherein said carbocationically terminated polymer is formed under reaction conditions from a reaction mixture that comprises: (i) a solvent system, (ii) one or more branched isoolefin monomer species, (iii) an initiator selected form an organic ether, an organic ester, an organic alcohol, and an organic halide, and (iv) a Lewis acid.

15. The method of claim 14, wherein said solvent system comprises a C₁ to C₄ alkyl halide and a C₅ to C₁₀ aliphatic or cycloaliphatic hydrocarbon.

16. The method of claim 11, wherein said one or more vinyl ether monomer species within said block copolymer comprise a hydrolysable vinyl ether monomer species, and wherein said method further comprises hydrolyzing at least a portion of the constitutional units that correspond to one or more hydrolysable vinyl ether monomer species, thereby forming alcohol groups.

17. The method of claim 11, wherein said one or more vinyl ether monomer species within said block copolymer comprise a hydrolysable vinyl ether monomer species and a non-hydrolysable vinyl ether monomer species, and wherein said method further comprises hydrolyzing at least a portion of the constitutional units that correspond to one or more hydrolysable vinyl ether monomer species, thereby forming alcohol groups.

18. The copolymer of claim 2, wherein said copolymer is a block copolymer comprising one or more polyisobutylene blocks and one or more vinyl ether blocks selected from poly(tert-butyl vinyl ether) blocks, poly(benzyl vinyl ether) blocks, and poly(tert-butyldimethylsilyl vinyl ether) blocks.

19. The copolymer of claim 3 or claim 4, wherein at least a portion of said constitutional units that correspond to one or more hydrolysable vinyl ether monomer species are hydrolyzed.

20. The copolymer of claim 2, wherein said one or more vinyl ether blocks are random copolymer blocks and wherein said one or more vinyl ether monomer species comprise a hydrolysable vinyl ether monomer species and a non-hydrolysable vinyl ether monomer species.

21. The copolymer of claim 1, wherein PVE is a random copolymer block and wherein said one or more vinyl ether monomer species comprise a hydrolysable vinyl ether monomer species and a non-hydrolysable vinyl ether monomer species.

22. The copolymer of claim 1, wherein said one or more olefin blocks are polyisobutylene blocks and wherein said one or more vinyl ether blocks are random poly(tert-butyl vinyl ether-co-cyclohexyl vinyl ether) blocks.

23. The copolymer of claim 22, wherein at least a portion of the tert-butyl vinyl ether constitutional units are hydrolyzed.

24. A copolymer comprising a plurality of constitutional units that correspond to one or more branched olefin monomer species and a plurality of constitutional units that correspond to vinyl alcohol, wherein said copolymer is a block copolymer of the formula X(POL-C-PVA)ₙ, where X corresponds to an initiator species, C corresponds to a capping species which is a residue derived from a diaryl alkene, POL is an olefin block that comprises a plurality of constitutional units corresponding to said one or more branched olefin monomer species, PVA is a vinyl ether block that comprises a plurality of constitutional units corresponding to vinyl alcohol, and n is a positive whole number ranging from 1 to 5.

25. The copolymer of claim 24, wherein said copolymer further comprises a plurality of constitutional units that correspond to one or more non-hydrolysable vinyl ether monomer species.

26. The copolymer of claim 24, wherein said copolymer is a block copolymer comprising: one or more olefin blocks that comprise a plurality of constitutional units corresponding to said one or more branched olefin monomer species and one or more vinyl alcohol blocks that comprise a plurality of constitutional units corresponding to vinyl alcohol.

27. The copolymer of claim 26, wherein said one or more vinyl alcohol blocks further comprise a plurality of constitutional units that correspond to one or more non-hydrolysable vinyl ether monomer species.

28. The copolymer of any of claims 1-2, 24 or 26, wherein said one or more branched olefin monomer species comprises at least one species selected from the group consisting of isoolefins, such as isobutylene.

29. The copolymer of claim 24, wherein said vinyl ether block further comprises a plurality of constitutional units that correspond to one or more non-hydrolysable vinyl ether monomer species.

30. A copolymer obtainable by the method of any of claims 11-17.

## Patentansprüche

1. Copolymer, umfassend eine Vielzahl von Struktureinheiten, die einer oder mehreren verzweigten Olefin-Monomerarten entsprechen, eine Vielzahl von Struktureinheiten, die einer oder mehreren Vinylether-Monomerarten entsprechen, wobei die Vinylether-Monomerarten aus hydrolysierbaren Vinylether-Monomerarten ausgewählt werden und die Vinylether-Monomerarten eine Tg von größer als etwa 25°C aufweisen und wobei das Copolymer ein Blockcopolymer der Formel X(POL-C-PVE)ₙ ist, worin X einer Initiatorspezies entspricht, C einer verschließenden Spezies entspricht, die ein aus einem Diarylalken hergeleiteter Rest ist, POL ein Olefinblock ist, der eine Vielzahl von Struktureinheiten umfaßt, die einer oder mehreren verzweigten Olefin-Monomerarten entsprechen, PVE ein Vinyletherblock ist, der die Vielzahl von Struktureinheiten umfaßt, die der einen oder mehreren Vinylether-Monomerarten entsprechen, und n eine positive ganze Zahl im Bereich von 1 bis 5 ist.

2. Copolymer gemäß Anspruch 1, worin das Copolymer ein Blockcopolymer ist, das folgendes umfaßt: einen oder mehrere Olefinblöcke, die eine Vielzahl von Struktureinheiten umfassen, die einer oder mehreren verzweigten Olefin-Monomerarten entsprechen, und einen oder mehrere Vinyletherblöcke, die eine Vielzahl von Struktureinheiten umfassen, die einer oder mehreren Vinylether-Monomerarten entsprechen.

3. Copolymer gemäß mindestens einem der Ansprüche 1 bis 2, worin die eine oder mehreren Vinylether-Monomerarten eine hydrolysierbare Vinylether-Monomerart umfassen.

4. Copolymer gemäß Anspruch 3, worin die eine oder mehreren Vinylether-Monomerarten ferner eine nicht-hydrolysierbare Vinylether-Monomerart umfassen.

5. Copolymer gemäß mindestens einem der Ansprüche 1 bis 2, worin die eine oder mehreren Vinylether-Monomerarten folgendes umfassen: eine hydrolysierbare Vinylether-Monomerart, ausgewählt aus tert-Butylvinylether, Benzylvinylether und tert-Butyldimethylsilylvinylether, und eine nicht-hydrolysierbare Vinylether-Monomerart ausgewählt aus Cyclohexylvinylether und Neopentylvinylether.

6. Copolymer gemäß mindestens einem der Ansprüche 1 bis 2, worin die eine oder mehreren Vinylether-Monomerarten mindestens einen Vertreter umfassen, der aus der Gruppe ausgewählt wird, die aus einer Vinylether-Monomerart mit einer T_{g} von größer als etwa 25°C, tert-Butylvinylether, Benzylvinylether und tert-Butyldimethylsilylvinylether besteht.

7. Copolymer gemäß mindestens einem der Ansprüche 1 bis 2, worin die eine oder mehreren verzweigten Olefin-Monomerarten Isobutylen umfassen und die eine oder mehreren Vinylether-Monomerarten ein Vinylethermonomer umfassen, das aus tert-Butylvinylether, Benzylvinylether und tert-Butyldimethylsilylvinylether ausgewählt wird.

8. Copolymer gemäß Anspruch 1, worin n = 1, 2 oder 3.

9. Copolymer gemäß Anspruch 1, worin die Initiatorspezies aus einem organischen Ether, einem organischen Ester, einem organischen Alkohol, einem organischen Halogenid, 2,4,4-Trimethylpentylchlorid und tert-Butyldicumylchlorid ausgewählt wird.

10. Copolymer gemäß Anspruch 1, worin die verschließende Spezies eine substituierte oder unsubstituierte Diphenylethylen-Spezies ist.

11. Verfahren zur Herstellung eines Blockcopolymers, umfassend das folgende:
(a) Bereitstellen eines carbokationisch begrenzten Polymers, umfassend einen oder mehrere Olefinblöcke, die eine Vielzahl von Struktureinheiten umfassen, die einer oder mehreren verzweigten Olefin-Monomerarten entsprechen;
(b) Inkontaktbringen des carbokationisch begrenzten Polymers unter Reaktionsbedingungen mit einer verschließenden Spezies, die unter den Reaktionsbedingungen nicht homopolymerisiert, wodurch ein endverschlossenes carbokationisch begrenztes Polymer gebildet wird, und
(c) Inkontaktbringen des endverschlossenen carbokationisch begrenzten Polymers mit einer oder mehreren Vinylether-Monomerarten unter Reaktionsbedingungen mit geringerer Lewis-Azidität als die Reaktionsbedingungen des Schritts (b),
wobei die Vinylether-Monomerarten aus hydrolysierbaren Vinylether-Monomerarten und Vinylether-Monomerarten mit einer T_{g} von größer als etwa 25°C ausgewählt werden.

12. Verfahren gemäß Anspruch 11, worin die Lewis-Azidität in Schritt (b) durch die Gegenwart von TiCl₄ geschaffen wird und worin die Lewis-Azidität in Schritt (c) durch Zugabe einer Titantetraalkoxid-Spezies verringert wird.

13. Verfahren gemäß Anspruch 11, worin die Reaktionsbedingungen eine Temperatur zwischen -50°C und -90°C umfassen.

14. Verfahren gemäß Anspruch 11, worin das carbokationisch begrenzte Polymer unter Reaktionsbedingungen in einer Reaktionsmischung gebildet wird, die folgendes umfaßt: (i) ein Lösungsmittelsystem, (ii) eine oder mehrere verzweigte Isoolefin-Monomerarten, (iii) einen Initiator, ausgewählt aus einem organischen Ether, einem organischen Ester, einem organischen Alkohol und einem organischen Halogenid, und (iv) eine Lewis-Säure.

15. Verfahren gemäß Anspruch 14, worin das Lösungsmittelsystem ein C₁-C₄-Alkylhalogenid und einen aliphatischen oder cycloaliphatischen C₅-C₁₀-Kohlenwasserstoff umfaßt.

16. Verfahren gemäß Anspruch 11, worin die eine oder mehreren Vinylether-Monomerarten innerhalb des Blockcopolymers eine hydrolysierbare Vinylether-Monomerart umfassen und worin das Verfahren ferner das Hydrolysieren zumindest eines Teils der Struktureinheiten umfaßt, die der einen oder mehreren hydrolysierbaren Vinylether-Monomerarten entsprechen, wodurch Alkoholgruppen gebildet werden.

17. Verfahren gemäß Anspruch 11, worin die eine oder mehreren Vinylether-Monomerarten innerhalb des Blockcopolymers eine hydrolysierbare Vinylether-Monomerart und eine nicht-hydrolysierbare Vinylether-Monomerart umfassen und worin das Verfahren ferner das Hydrolysieren zumindest eines Teils der Struktureinheiten umfaßt, die der einen oder mehreren hydrolysierbaren Vinylether-Monomerarten entsprechen, wodurch Alkoholgruppen gebildet werden.

18. Copolymer gemäß Anspruch 2, worin das Copolymer ein Blockcopolymer ist, umfassend einen oder mehrere Polyisobutylenblöcke und einen oder mehrere Vinyletherblöcke, ausgewählt aus Poly(tert-butylvinylether)blöcken, Poly(benzylvinylether)blöcken und Poly(tert-butyldimethylsilylvinylether)blöcken.

19. Copolymer gemäß Anspruch 3 oder 4, worin zumindest ein Teil der Struktureinheiten, die der einen oder mehreren hydrolysierbaren Vinylether-Monomerarten entsprechen, hydrolysiert ist.

20. Copolymer gemäß Anspruch 2, worin die eine oder mehrere Vinyletherblöcke Random-Copolymerblöcke sind und die eine oder mehrere Vinylether-Monomerarten eine hydrolysierbare Vinylether-Monomerart und eine nicht-hydrolysierbare Vinylether-Monomerart umfassen.

21. Copolymer gemäß Anspruch 1, worin PVE ein Random-Copolymerblock ist und worin die eine oder mehrere Vinylether-Monomerarten eine hydrolysierbare Vinylether-Monomerart und eine nicht-hydrolysierbare Vinylether-Monomerart umfassen.

22. Copolymer gemäß Anspruch 1, worin der eine oder mehrere Olefinblöcke Polyisobutylenblöcke sind und worin der eine oder mehrere Vinyletherblöcke Random-Poly(tert-butylvinylether-co-cyclohexylvinylether)-Blöcke sind.

23. Copolymer gemäß Anspruch 22, worin zumindest ein Teil der tert-Butylvinylether-Struktureinheiten hydrolysiert sind.

24. Copolymer, umfassend eine Vielzahl von Struktureinheiten, die einer oder mehreren verzweigten Olefin-Monomerarten entsprechen, und eine Vielzahl von Struktureinheiten, die Vinylalkohol entsprechen, worin das Copolymer ein Blockcopolymer der Formel X(POL-C-PVA)ₙ ist, worin X einer Initiatorspezies entspricht, C einer verschließenden Spezies entspricht, die ein aus einem Diarylalken hergeleiteter Rest ist, POL ein Olefinblock ist, der eine Vielzahl von Struktureinheiten umfaßt, die einer oder mehreren verzweigten Olefin-Monomerarten entsprechen, PVA ein Vinyletherblock ist, der eine Vielzahl von Struktureinheiten umfaßt, die Vinylalkohol entsprechen, und n eine positive ganze Zahl im Bereich von 1 bis 5 ist.

25. Copolymer gemäß Anspruch 24, worin das Copolymer ferner eine Vielzahl von Struktureinheiten umfaßt, die einer oder mehreren nicht-hydrolysierbaren Vinylether-Monomerarten entsprechen.

26. Copolymer gemäß Anspruch 24, worin das Copolymer ein Blockcopolymer ist, das folgendes umfaßt: einen oder mehrere Olefinblöcke, die eine Vielzahl von Struktureinheiten umfassen, die einer oder mehreren verzweigten Olefin-Monomerarten entsprechen, und einen oder mehrere Vinylalkoholblöcke, die eine Vielzahl von Struktureinheiten umfassen, die Vinylalkohol entsprechen.

27. Copolymer gemäß Anspruch 26, worin der eine oder mehrere Vinylalkoholblöcke ferner eine Vielzahl von Struktureinheiten umfassen, die einer oder mehreren nicht-hydrolysierbaren Vinylether-Monomerarten entsprechen.

28. Copolymer gemäß mindestens einem der Ansprüche 1 bis 2, 24 oder 26, worin die eine oder mehrere verzweigte Olefin-Monomerarten mindestens eine Art umfassen, die aus der Gruppe ausgewählt wird, die aus Isoolefinen, wie Isobutylen, besteht.

29. Copolymer gemäß Anspruch 24, worin der Vinyletherblock ferner eine Vielzahl von Struktureinheiten umfaßt, die einer oder mehreren nicht-hydrolysierbaren Vinylether-Monomerarten entsprechen.

30. Copolymer, erhältlich durch das Verfahren gemäß mindestens einem der Ansprüche 11 bis 17.

## Revendications

1. Copolymère comprenant une pluralité d'unités constitutionnelles qui correspondent à une ou plusieurs espèces de monomère d'oléfine ramifiées ; une pluralité d'unités constitutionnelles qui correspondent à une ou plusieurs espèces de monomère d'éther vinylique, dans lequel les espèces de monomère d'éther vinylique sont choisies parmi des espèces de monomère d'éther vinylique hydrolysables et des espèces de monomère d'éther vinylique possédant une T_{g} supérieure à environ 25°C, et dans lequel ledit copolymère est un copolymère séquencé de formule X(POL-C-PVE)ₙ, où X correspond à une espèce d'initiateur, C correspond à une espèce de coiffage qui est un résidu dérivé d'un diaryl alcène, POL est une séquence d'oléfine qui comprend la pluralité d'unités constitutionnelles correspondant auxdites une ou plusieurs espèces de monomère d'oléfine ramifiées, PVE est une séquence d'éther vinylique qui comprend la pluralité d'unités constitutionnelles correspondant auxdites une ou plusieurs espèces de monomère d'éther vinylique, et n est un nombre entier positif se situant de 1 à 5.

2. Copolymère selon la revendication 1, dans lequel ledit copolymère est un copolymère séquencé comprenant :
une ou plusieurs séquences d'oléfine qui comprennent une pluralité d'unités constitutionnelles correspondant auxdites une ou plusieurs espèces de monomère d'oléfine ramifiées et une ou plusieurs séquences d'éther vinylique qui comprennent une pluralité d'unités constitutionnelles correspondant auxdites une ou plusieurs espèces de monomère d'éther vinylique.

3. Copolymère selon l'une quelconque des revendications 1 à 2, dans lequel lesdites une ou plusieurs espèces de monomère d'éther vinylique comprennent une espèce de monomère d'éther vinylique hydrolysable.

4. Copolymère selon la revendication 3, dans lequel lesdites une ou plusieurs espèces de monomère d'éther vinylique comprennent en outre une espèce de monomère d'éther vinylique non hydrolysable.

5. Copolymère selon l'une quelconque des revendications 1 à 2, dans lequel lesdites une ou plusieurs espèces de monomère d'éther vinylique comprennent : une espèce de monomère d'éther vinylique hydrolysable choisie parmi l'éther de tert-butyle et de vinyle, l'éther de benzyle et de vinyle et l'éther de tert-butyldiméthylsilyle et de vinyle, et une espèce de monomère d'éther vinylique non-hydrolysable choisie parmi l'éther de cyclohexyle et de vinyle et l'éther de néopentyle et de vinyle.

6. Copolymère selon l'une quelconque des revendications 1 à 2, dans lequel lesdites une ou plusieurs espèces de monomère d'éther vinylique comprennent au moins un élément choisi parmi le groupe consistant en une espèce de monomère d'éther vinylique possédant une T_{g} supérieure à environ 25 °C, l'éther de tert-butyle et de vinyle, l'éther de benzyle et de vinyle et l'éther de tert-butyldiméthylsilyle et de vinyle.

7. Copolymère selon l'une quelconque des revendications 1 à 2, dans lequel lesdites une ou plusieurs espèces de monomère d'oléfine ramifiées comprennent l'isobutylène et dans lequel lesdites une ou plusieurs espèces de monomère d'éther vinylique comprennent un monomère d'éther vinylique choisi parmi l'éther de tert-butyle et de vinyle, l'éther de benzyle et de vinyle et l'éther de tert-butyldiméthylsilyle et de vinyle.

8. Copolymère selon la revendication 1, dans lequel n = 1, 2 ou 3.

9. Copolymère selon la revendication 1, dans lequel ladite espèce d'initiateur est choisie parmi un éther organique, un ester organique, un alcool organique, un halogénure organique, le chlorure de 2,4,4-triméthylpentyle et le chlorure de tert-butyl-dicumyle.

10. Copolymère selon la revendication 1, dans lequel ladite espèce de coiffage est une espèce de diphényl éthylène substituée ou non substituée.

11. Procédé destiné à fabriquer un copolymère séquencé comprenant :
(a) de prévoir un polymère terminé carbocationiquement comprenant une ou plusieurs séquences d'oléfine qui comprennent un pluralité d'unités constitutionnelles correspondant à une ou plusieurs espèces de monomère d'oléfine ramifiées ;
(b) de mettre en contact dans des conditions de réaction ledit polymère terminé carbocationiquement avec une espèce de coiffage qui ne s'homopolymérise pas dans lesdites conditions de réaction, pour ainsi former un polymère terminé carbocationiquement à extrémité coiffée ; et
(c) de mettre en contact ledit polymère terminé carbocationiquement à extrémité coiffée avec une ou plusieurs espèces de monomère d'éther vinylique dans des conditions de réaction comportant une acidité de Lewis inférieure aux conditions de réaction de l'étape (b),
dans lequel les espèces de monomère d'éther vinylique sont choisies parmi des espèces de monomère d'éther vinylique hydrolysables et des espèces de monomère d'éther vinylique possédant une T_{g} supérieure à environ 25 °C.

12. Procédé selon la revendication 11, dans lequel l'acidité de Lewis au cours de l'étape (b) est fournie par la présence de TiCl₄, et dans lequel l'acidité de Lewis au cours de l'étape (c) est abaissée par l'addition d'une espèce de tétraalcoxyde de titane.

13. Procédé selon la revendication 11, dans lequel lesdites conditions de réaction comprennent une température située entre -50 °C et -90 °C.

14. Procédé selon la revendication 11, dans lequel ledit polymère terminé carbocationiquement est formé dans les conditions de réactions issues d'un mélange réactionnel qui comprend : (i) un système de solvants, (ii) une ou plusieurs espèces de monomère d'isooléfine ramifiées, (iii) un initiateur choisi parmi un éther organique, un ester organique, un alcool organique, et un halogénure organique, et (iv) un acide de Lewis.

15. Procédé selon la revendication 14, dans lequel ledit système de solvants comprend un halogénure d'alkyle en C₁ à C₄ et un hydrocarbure aliphatique ou cycloaliphatique en C₅ à C₁₀.

16. Procédé selon la revendication 11, dans lequel lesdites une ou plusieurs espèces de monomère d'éther vinylique se trouvant au sein dudit copolymère séquencé comprennent une espèce de monomère d'éther vinylique hydrolysable, et dans lequel ledit procédé comprend en plus d'hydrolyser au moins une portion des unités constitutionnelles qui correspondent à une ou plusieurs espèces de monomère d'éther vinylique hydrolysables, pour ainsi former des groupements alcool.

17. Procédé selon la revendication 11, dans lequel lesdites une ou plusieurs espèces de monomère d'éther vinylique se trouvant au sein dudit copolymère séquencé comprennent une espèce de monomère d'éther vinylique hydrolysable et une espèce de monomère d'éther vinylique non hydrolysable, et dans lequel ledit procédé comprend en plus d'hydrolyser au moins une portion des unités constitutionnelles qui correspondent à une ou plusieurs espèces de monomère d'éther vinylique hydrolysables, pour ainsi former des groupements alcool.

18. Copolymère selon la revendication 2, dans lequel ledit copolymère est un copolymère séquencé comprenant une ou plusieurs séquences de polyisobutylène et une ou plusieurs séquences d'éther vinylique choisies parmi des séquences de poly(éther de tert-butyle et de vinyle), des séquences de poly(éther de benzyle et de vinyle), et des séquences de poly(éther de tert-butyldimethylsilyle et de vinyle).

19. Copolymère selon la revendication 3 ou la revendication 4, dans lequel au moins une portion desdites unités constitutionnelles qui correspondent à une ou plusieurs espèces de monomère d'éther vinylique hydrolysables sont hydrolysées.

20. Copolymère selon la revendication 2, dans lequel lesdites une ou plusieurs séquences d'éther vinylique sont des séquences de copolymère aléatoires et dans lequel lesdites une ou plusieurs espèces de monomère d'éther vinylique comprennent une espèce de monomère d'éther vinylique hydrolysable et une espèce de monomère d'éther vinylique non hydrolysable.

21. Copolymère selon la revendication 1, dans lequel PVE est une séquence de copolymère aléatoire et dans lequel lesdites une ou plusieurs espèces de monomère d'éther vinylique comprennent une espèce de monomère d'éther vinylique hydrolysable et une espèce de monomère d'éther vinylique non hydrolysable.

22. Copolymère selon la revendication 1, dans lequel lesdites une ou plusieurs séquences d'oléfine sont des séquences de polyisobutylène et dans lequel lesdites une ou plusieurs séquences d'éther vinylique sont des séquences de poly(éther de tert-butyle et de vinyle-co-éther de cyclohexyle et de vinyle) aléatoires.

23. Copolymère selon la revendication 22, dans lequel au moins une portion des unités constitutionnelles d'éther de tert-butyle et de vinyle est hydrolysée.

24. Copolymère comprenant une pluralité d'unités constitutionnelles qui correspondent à une ou plusieurs espèces de monomère d'oléfine ramifiées et une pluralité d'unités constitutionnelles qui correspondent à un alcool vinylique, dans lequel ledit copolymère est un copolymère séquencé de formule X(POL-C-PVA)ₙ, où X correspond à une espèce d'initiateur, C correspond à une espèce de coiffage qui est un résidu dérivé d'un diaryl alcène, POL est une séquence d'oléfine qui comprend une pluralité d'unité constitutionnelles correspondant à ladite une ou plusieurs espèces de monomère d'oléfine ramifiées, PVA est une séquence d'éther vinylique qui comprend une pluralité d'unité constitutionnelles correspondant à un alcool vinylique, et n est un nombre entier positif se situant de 1 à 5.

25. Copolymère selon la revendication 24, dans lequel ledit copolymère comprend en outre une pluralité d'unités constitutionnelles qui correspondent à une ou plusieurs espèces de monomère d'éther vinylique non hydrolysables.

26. Copolymère selon la revendication 24, dans lequel ledit copolymère est un copolymère séquencé comprenant :
une ou plusieurs séquences d'oléfine qui comprennent une pluralité d'unités constitutionnelles correspondant auxdites une ou plusieurs espèces de monomère d'oléfine ramifiées et une ou plusieurs séquences d'alcool vinylique qui comprennent une pluralité d'unités constitutionnelles correspondant à un alcool vinylique.

27. Copolymère selon la revendication 26, dans lequel lesdites une ou plusieurs séquences d'alcool vinylique comprennent en outre une pluralité d'unités constitutionnelles qui correspondent à une ou plusieurs espèces de monomère d'éther vinylique non hydrolysable.

28. Copolymère selon l'une quelconque des revendications 1 à 2, 24 ou 26, dans lequel lesdites une ou plusieurs espèces de monomère d'oléfine ramifiées comprennent au moins une espèce choisie parmi le groupe consistant en des isooléfines, telle que l'isobutène.

29. Copolymère selon la revendication 24 dans lequel ladite séquence d'éther vinylique comprend en outre une pluralité d'unités constitutionnelles qui correspondent à une ou plusieurs espèces de monomère d'éther vinylique non hydrolysables.

30. Copolymère pouvant être obtenu par le procédé de l'une quelconque des revendications 11 à 17.
